# FASCICULE DE BREVET EUROPEEN

(11) **EP 4 217 898 B1**
(45) Date de publication et mention de la délivrance du brevet: **01.01.2025**
(21) Numéro de dépôt: 21783174.2
(22) Date de dépôt: 22.09.2021
(51) Int. Cl.: G06F 21/62, G06F 16/21, G06F 16/93, H04L 9/32, G06F 21/16, G06Q 10/10, H04L 9/40, H04L 9/00

(54) **PROCÉDÉ ET PLATEFORME DE TRAÇABILITÉ D'UN DOCUMENT ANNEXE GÉNÉRÉ PAR UN TIERS À PARTIR D'UN DOCUMENT D'ORIGINE VIA UN SYSTÈME À CHAÎNE DE BLOCS.**
VERFAHREN UND PLATTFORM ZUM VERFOLGEN EINES VON EINEM DRITTEN VON EINEM ORIGINALDOKUMENT ERZEUGTEN ANGEHÄNGTEN DOKUMENTS UNTER VERWENDUNG EINES BLOCKCHAIN-SYSTEMS
METHOD AND PLATFORM FOR TRACING AN ATTACHED DOCUMENT GENERATED BY A THIRD PARTY FROM AN ORIGINAL DOCUMENT USING A BLOCK CHAIN SYSTEM

(30) Priorité: 24.09.2020 FR 2009747
(43) Date de publication de la demande: 02.08.2023
(73) Titulaire: Davron Digital, 75008 Paris (FR)
(72) Inventeur: DAVRON, Anne-Cécile, 75008 PARIS (FR); DAVRON, David, 75008 PARIS (FR)
(74) Mandataire: Nicolle, Olivier
(86) Numéro de dépôt international: PCT/EP2021/076095
(87) Numéro de publication internationale: WO 2022/063844

(56) Documents cités:
- WO-A1-2020/123464
- US-A1- 2019 356 493
- US-A1- 2020 162 236
- NIZAMUDDIN N ET AL: "Decentralized document version control using ethereum blockchain and IPFS", COMPUTERS & ELECTRICAL ENGINEERING, vol. 76, 1 April 2019 (2019-04-01), pages 183 - 197, XP085690877, ISSN: 0045-7906, DOI: 10.1016/J.COMPELECENG.2019.03.014

## Description

[La présente invention concerne la traçabilité d'un document annexe généré par un tiers à partir d'un document d'origine via un système à chaîne de blocs.

Elle trouve une application générale dans l'établissement d'une procédure de traçabilité à valeur probante d'un document destiné à être traité par plusieurs tiers, et plus particulièrement lors de procédures de légalisation, ou pose d'apostille par des autorités habilitées nécessitant la vérification de l'authenticité des pièces et documents présentés.

On entend ici par traitement d'un document, tout traitement informatique d'un document numérique appartenant non limitativement au groupe formé par traduction, légalisation, apostille, association d'un document annexe ou autre traitement analogue.

D'une manière générale, la procédure de légalisation/apostille requiert qu'un document numérique soit soumis à plusieurs étapes de validation, par différents intervenants/tiers de nature différente parmi lesquels des entreprises, associations, notaires, chambres de commerce, ministères des affaires étrangères, consulats, mairies, traducteurs assermentés, et autres.

Les signatures électroniques sont souvent faites de manière indépendante les unes des autres. Les tiers signant les documents ne sont pas forcément au courant de l'étape de traitement précédente ou de l'étape de traitement suivante, et à priori ne se concertent pas.

De plus, certains traitements sont effectués physiquement sur un document, et ledit document scanné et ajouté par l'acteur auteur du traitement, ce qui représente une difficulté supplémentaire d'authentification vis-à-vis d'un document d'origine numérique.

Plus le nombre d'intervenants est important, plus il devient difficile, voire impossible de tracer la vie du document dans son intégralité, et de prouver la bonne réalisation de chacune des étapes de traitement.

La difficulté de traçabilité est d'autant plus grande lorsque des documents annexes doivent être joints au document initialement suivi, telle qu'une traduction ou une pièce jointe associée à un document d'origine.

La difficulté de traçabilité est encore plus complexe en raison de la variété de normes techniques appliquées à la signature électronique ainsi qu'en raison de la grande variété de fournisseurs de solutions logicielles, le plus souvent incompatibles entre elles.

En effet, lorsque plusieurs acteurs doivent signer un même document, avec des solutions de signature électronique différentes peuvent provoquer un problème de compatibilité entre logiciels de signature électronique, tel que l'écrasement de signature(s) précédente(s) en cas de signature par un logiciel différent, de signature a posteriori, ou de signature d'un tiers au contrat.

De plus, la signature électronique séquentielle par différents acteurs présente des difficultés d'utilisation tel que l'installation d'un logiciel de signature électronique en local, télécharger le document, signer en local, et exporter le document signé.

On connaît déjà des procédés permettant la vérification active de l'authenticité d'un document enregistré par analyse dudit document et la génération d'un accès sécurisé associé à une transaction stockée sur un système de chaîne de bloc. Le document US 2019 / 356493 A1 décrit un tel procédé.

Toutefois, ces procédés de l'art antérieur ne permettent pas d'établir une traçabilité de l'authenticité du document d'origine ayant subi une succession de traitements par plusieurs tiers distincts, ni d'établir un contrôle ou un moyen de preuve lorsque des documents annexes telles que des traductions ou apostilles sont jointes par le tiers aux documents d'origine.

La présente invention remédie à ces inconvénients.

L'invention est définie dans les revendications 1 et 9, respectivement. Des modes de réalisation particuliers sont définis dans les revendications dépendantes. U L'invention porte sur un procédé de traçabilité d'un document annexe généré par un tiers à partir d'un document d'origine via un système à chaîne de blocs.

Selon une définition générale de l'invention, le procédé de traçabilité comprend les étapes suivantes :
- une étape d'initialisation comprenant l'enregistrement et l'analyse du document d'origine pour obtenir des métadonnées d'initialisation comprenant des métadonnées intrinsèques au document d'origine et des métadonnées extrinsèques comprenant des empreintes numériques du document d'origine, de son contenu et de métadonnées en relation avec le document d'origine, les métadonnées d'initialisation étant déposées dans un contrat intelligent du système à chaine de blocs;
   - une étape de traitement par le tiers comprenant la génération du document annexe par le tiers, ledit document annexe ainsi généré et le document d'origine reçu par le tiers pour traitement étant signés électroniquement l'un et l'autre par le tiers qui indique les empreintes numériques de référence du document de référence dont il est l'annexe et de son contenu pris pour signature; et
   - une étape de réception en provenance du tiers comprenant l'enregistrement et l'analyse du document d'origine et du document annexe ainsi reçus signés en provenance du tiers pour obtenir des données de réception comprenant des métadonnées intrinsèques du document d'origine et des empreintes numériques du document d'origine reçu, du document annexe et du document de référence et de leur contenu respectif ainsi que de métadonnées en relation avec le document d'origine et le document annexe, les métadonnées de réception étant déposées dans un autre contrat intelligent du système à chaine de blocs;
- un contrat intelligent ainsi déposé après chaque étape d'initialisation et après chaque étape de réception, permettant ainsi de constituer une piste d'audit et de traçabilité du document annexe généré par le tiers à partir du document d'origine.

Grâce à l'invention, la piste d'audit ainsi constituée, consolidée, horodatée, et signée sur un système à chaîne de blocs, par exemple publique, est accessible par des autorités compétentes pour vérification et preuve de l'authenticité du document annexe généré par un tiers à partir du document d'origine, ainsi que de l'état du document original en tout point de la procédure (initialisation, traitement, et réception).

Selon un mode de réalisation, le procédé comprend en outre une étape d'envoi du document d'origine au tiers, les métadonnées intrinsèques au document d'origine et les métadonnées extrinsèques comprenant les empreintes numériques du document d'origine, de son contenu et de métadonnées en relation avec le document d'origine étant déposées dans un contrat intelligent du système à chaine de blocs.

Avantageusement, les métadonnées ainsi obtenues à chaque étape d'initialisation, d'envoi et de réception sont stockées dans une base de données pour être ensuite associées dans un arbre de Merkle, dont le hash racine est déposé dans le système de chaine à blocs.

Par exemple, les métadonnées intrinsèques appartiennent au groupe formé par type, nom, taille, date d'enregistrement, identifiant utilisateur.

En pratique, les empreintes numériques sont calculées selon une fonction de hachage choisie, par exemple SHA 256.

Selon un autre mode de réalisation, le document annexe appartient au groupe formé par document traduit, document numérique contenant une légalisation, document numérique comprenant une apostille.

L'invention a également pour objet une plateforme de traçabilité d'un document annexe généré par un tiers à partir d'un document d'origine associé à l'aide d'un outil interactif via un système à chaîne de blocs, pour la mise en oeuvre du procédé selon l'invention.

Selon un autre aspect de l'invention, la plateforme comprend :
- des moyens d'enregistrement et d'analyse du document d'origine pour obtenir des métadonnées d'initialisation comprenant des métadonnées intrinsèques au document d'origine et des métadonnées extrinsèques comprenant des empreintes numériques du document d'origine , de son contenu et de métadonnées en relation avec le document d'origine,
- des moyens de réception en provenance du tiers comprenant des moyens d'enregistrement et d'analyse du document d'origine et du document annexe ainsi reçus signés en provenance du tiers pour obtenir des données de réception comprenant des métadonnées intrinsèques du document d'origine et des empreintes numériques du document d'origine reçu, du document annexe et du document de référence et de leur contenu respectif ainsi que de métadonnées en relation avec le document d'origine et le document annexe;
- des moyens pour déposer les métadonnées d'initialisation et les métadonnées de réception dans un contrat intelligent respectif du système à chaine de blocs.

Selon un autre mode de réalisation de l'invention, la plateforme comprend un module applicatif apte à enregistrer les paramètres de traitement du document souhaités par un utilisateur, apte à identifier au moins un traitement nécessaire, apte à sélectionner pour chaque type de traitement nécessaire au moins un tiers dans chaque base de donnée nécessaire, et apte à permettre le recrutement du tiers supplémentaire suivant après traitement et l'enregistrement du document traité par le tiers courant.

Le procédé selon l'invention permet de tracer dans son intégralité la vie du document d'origine et de tout document annexe ou joint associés générés lors d'un ou plusieurs traitements, et de prouver la bonne réalisation de chacune des étapes de traitement, tout en permettant l'intégration de multiples tiers dans la chaine de traitement, et en résolvant le problème de disparité des normes utilisées par chacun des tiers.

Avantageusement, l'intégration des informations ciblées par le procédé selon l'invention sur un contrat intelligent déposé sur un système à chaîne de bloc permet en outre l'immobilisation des informations déposées concernant les métadonnées des documents, leurs empreintes numériques en tout point du cycle de traitement et ainsi garantir la consolidation des informations formant la piste d'audit pour les entités vérifiant l'authenticité des documents.

D'autres caractéristiques et avantages de l'invention apparaîtront à la lumière de la description détaillée ci-après et des dessins et des tableaux dans lesquels :
la **[****fig. 1****]** décrit schématiquement les étapes du procédé de traçabilité conforme à l'invention ;
la **[****fig. 2****]** décrit schématiquement un mode de réalisation particulier du procédé de traçabilité selon l'invention ;
la **[****fig. 3****]** décrit schématiquement les sous-étapes de l'étape d'initialisation selon l'invention ;
la **[****fig. 4****]** représente schématiquement un exemple particulier de l'étape de traitement selon l'invention ;
la **[****fig. 5****]**; décrit schématiquement un mode de réalisation des données stockées lors des sous-étapes de stockage sur un système à bloc du procédé conforme à l'invention ;
la **[****fig. 6****]** décrit schématiquement un mode de réalisation particulier des métadonnées intrinsèques récupérées lors de la mise en oeuvre du procédé conforme à l'invention ;
la **[****fig. 7****]** décrit schématiquement l'architecture matérielle de la plateforme conforme à l'invention ; et

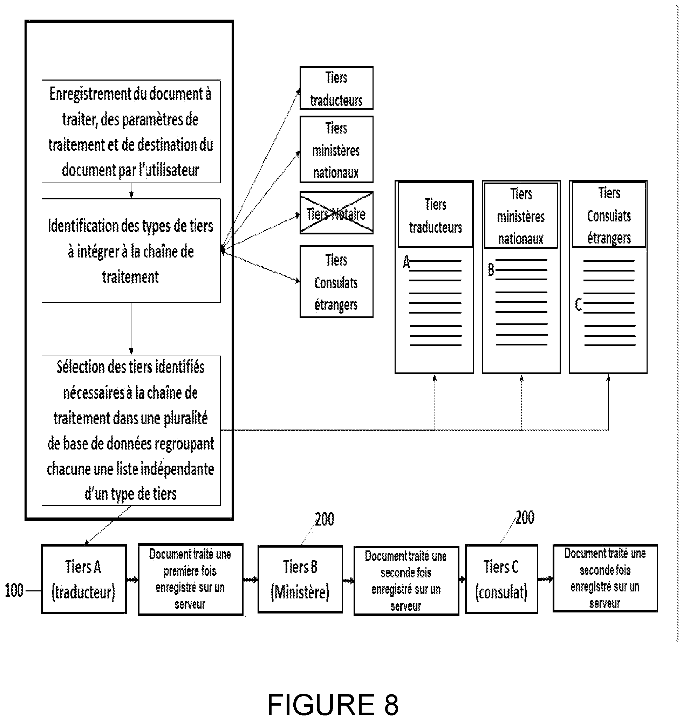

la **[****fig. 8****]** décrit schématiquement les fonctions du module applicatif de la plateforme conforme à l'invention.

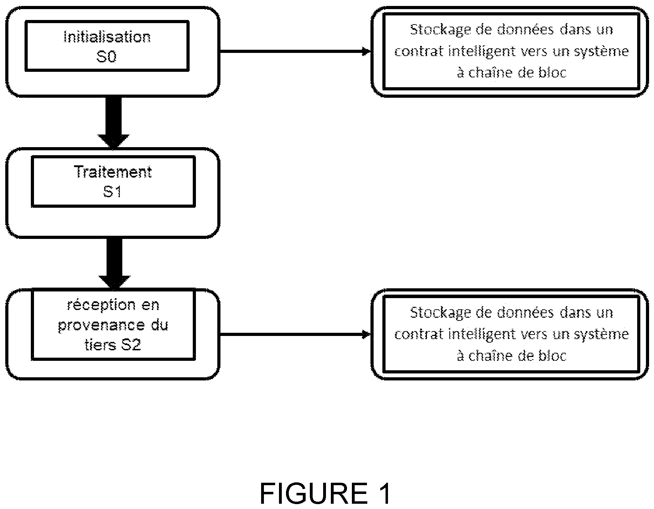

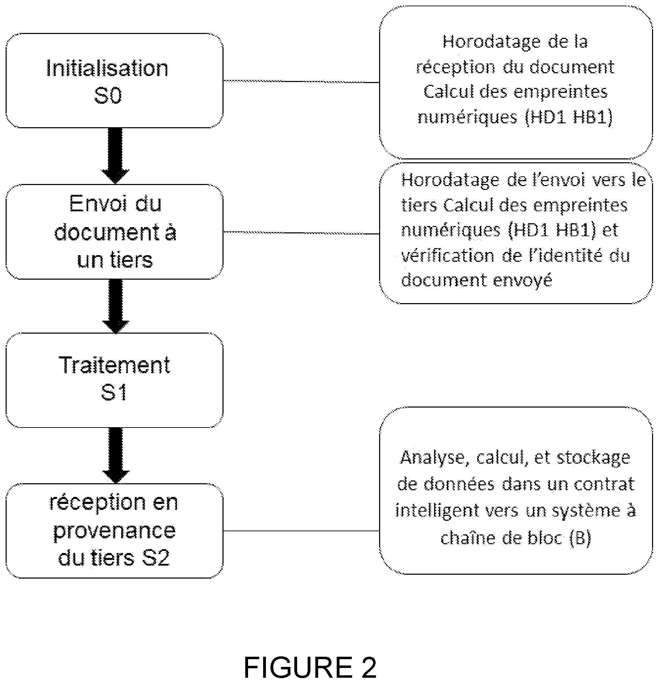

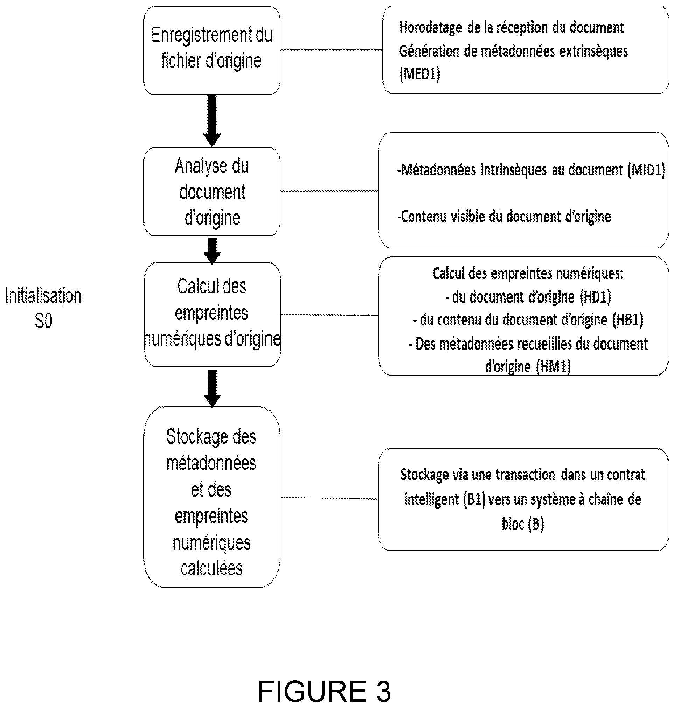

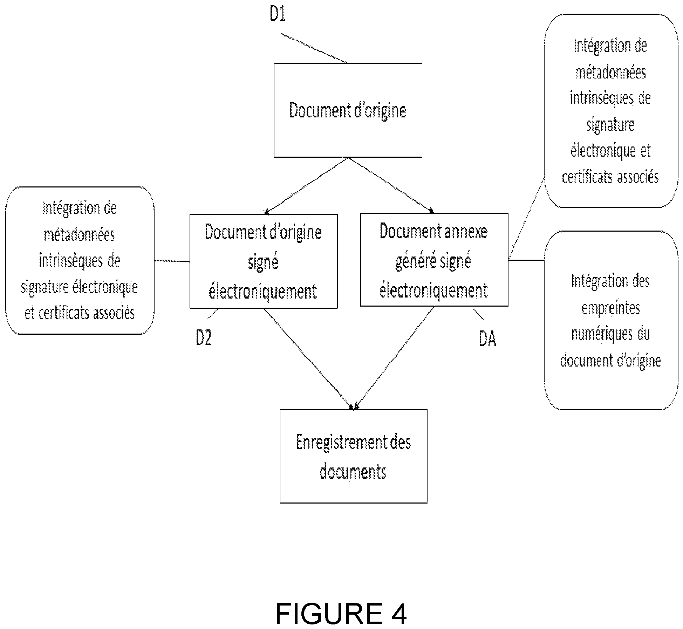

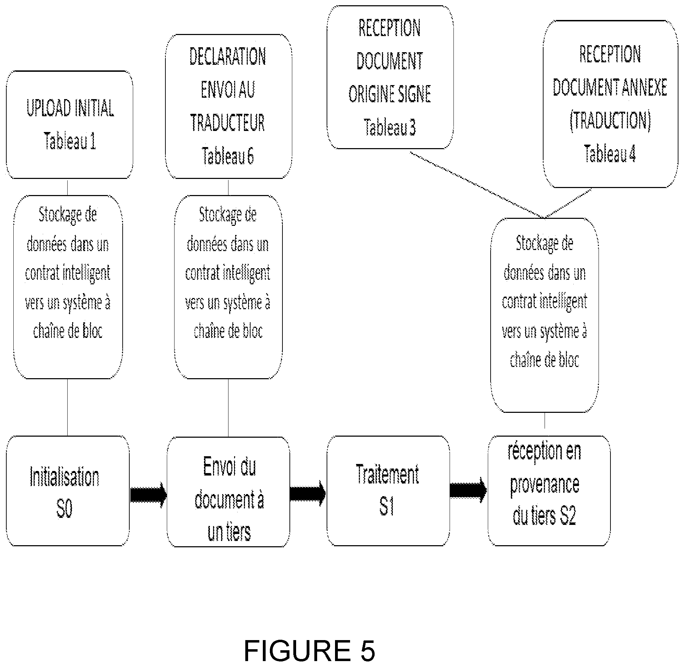

En référence aux **figures 1 à 5****,** le procédé de traçabilité conforme à l'invention comporte une succession d'étapes selon la séquence suivante : une étape d'initialisation sa visant à analyser, calculer, et enregistrer les informations d'un document d'origine D1 dans une transaction sur un système de chaîne à blocs B pour établir un premier maillon d'une chaîne de traçabilité, une étape de traitement S1, effectuée par un tiers 100, intégrant la génération d'un document d'origine signé électroniquement, ainsi qu'un document annexe DA associé au document d'origine signé D2, et une étape de réception S2 en provenance du tiers 100 comprenant l'enregistrement et l'analyse des documents D2,DA générés lors du traitement S1, et le calcul d'empreintes électroniques correspondantes à stocker dans un système de chaîne à blocs B.

Selon une première étape d'initialisation S0, un utilisateur enregistre un document original D1 numérique. Le document original D1 est ensuite analysé pour obtenir les données relatives au contenu visible de celui-ci, ainsi que des métadonnées d'initialisation.

En pratique, les données relatives au contenu visible appartiennent non limitativement au groupe formé par texte, image, objet numérique intégré au document D1, ou données similaires.

Selon un mode de réalisation de l'invention, la sous-étape d'analyse du document d'origine D1 comprend un traitement de reconnaissance de texte, permettant l'extraction sous forme de texte de tout contenu textuel reconnu sur le document.

A titre d'exemple non limitatif, le traitement de reconnaissance de texte appartient au groupe formé par Reconnaissance vocale pour les documents d'origine de type audio et vidéo, Reconnaissance visuelle OCR pour les documents de type image.

Parmi les métadonnées obtenues, sont retrouvées des métadonnées intrinsèques au document d'origine D1 et des métadonnées extrinsèques au document d'origine D1.

Les métadonnées intrinsèques MID1 au document d'origine D1 appartiennent non limitativement au groupe formé par nom du document, taille, données de signatures électroniques, de certificat, identification du projet, objet de rattachement, numéro de procédure.

A titre d'exemple non limitatif, les métadonnées intrinsèques d'un document appartiennent au groupe formé par type de document, type de traitement, identité du tiers signataire, signature(s) électronique(s) et certificats associés, validité du/des certificat(s) à la date de signature, titre, auteur(s), entreprise, date, lieu, langage source, pays de délivrance.

Alternativement, si le document est un document annexe associé à un document traité, les métadonnées intrinsèques appartiennent non limitativement au groupe formé par type de document, langue de destination, pays de destination, fonction du tiers 100, autorité sous laquelle le tiers 100 opère, signature(s) électronique(s) et certificats associés du tiers 100, identité du/des tiers signataires, signature(s) électronique(s) et certificats associés, validité du/des certificat(s) à la date de signature, titre, date, lieu, nature du sceau ou tampon.

Les métadonnées extrinsèques MED1 au document d'origine D1 sont définies comme les métadonnées générées par l'application mettant en oeuvre le procédé selon l'invention, et comprenant au moins l'horodatage de l'enregistrement par l'utilisateur, ainsi que l'identifiant de l'utilisateur ayant effectué l'enregistrement dudit document original D1.

Selon une sous étape de l'étape d'initialisation S0 du procédé selon l'invention, sont calculées des empreintes numériques choisies, lesdites empreintes numériques définissant des métadonnées extrinsèques au document d'origine D1 à générer.

En pratique, une fonction de hachage choisie est appliquée pour le calcul des empreintes numériques.

A titre d'exemple, les empreintes numériques sont calculées grâce à une fonction de hachage SHA 256.

La sous-étape de calcul de l'étape d'initialisation sa selon l'invention comporte le calcul de l'empreinte numérique du document d'origine HD1, de l'empreinte numérique HB1 du contenu analysé, ainsi que l'empreinte numérique HM1 des métadonnées intrinsèques en relation avec le document d'origine D1.

Selon une dernière sous étape de l'étape d'initialisation S0, les empreintes numériques HD1, HB1, HM1 ainsi calculées, ainsi que les métadonnées intrinsèques extraites et extrinsèques générées sont stockées dans une transaction via un contrat intelligent B1, dans un système à chaine de blocs B.

**[Tableaux 1]**

| **UPLOAD INITIAL** | |
|---|---|
| Type | Original à légaliser |
| Nom | KBIS SOCIETE PDF |
| Taille | 17 Ko |
| Date upload | 08/09/2020 à 11h10 |
| IS User upload | ABL |
| HD1 | 3j4XH |
| HB1 | Lolp3 |
| HM1 | X059 |
| Données Signatures | N/A |
| ID « PROJET » interne Davron | 7 |

Le procédé de traçabilité selon l'invention comporte en outre une étape de traitement S1 par un tiers 100.

On entend par tiers 100, tout acteur habilité à effectuer un traitement choisi.

A titre d'exemple non limitatif, le tiers 100 peut être un notaire, un traducteur assermenté, une entité gouvernementale nationale ou étrangère, ou tout autre acteur assimilable, habilité à certifier un document.

On définit par traitement, tout acte de signature électronique d'un document permettant la certification dudit document par un tiers 100 habilité, ainsi que tout autre document annexe généré.

A titre d'exemple non limitatif, le traitement appartient au groupe formé par l'apposition d'une signature électronique sur un document original D1 par un tiers assermenté et la génération d'un document annexe DA associé au document d'origine signé électroniquement D2, la traduction et signature d'un document original D1 générant un document annexe DA traduit, la légalisation ou pose d'une apostille sur au moins un document D1 à traiter.

En pratique, le document annexe DA appartient au groupe formé par document traduit, document numérique contenant une légalisation, document numérique comprenant une apostille.

La signature électronique appliquée au document original D1 et son document annexe DA permettent l'intégration de métadonnées intrinsèques au document parmi lesquels les données de signature, et le ou les certificats associés.

**[Tableaux 2]**

| •Certificat X509 associé à la signature électronique | Données de signature électronique |
|---|---|
| o Version Number | -Date et heure de signature |
| o Serial Number | |
| o Signature Algorithm ID | -Transaction ID |
| o Issuer Name | |
| o Validity period | -Statut |
| -Not Before | -Type de signature |
| -Not After | -Plateforme de signature |
| o Subject name | |
| o Subject Public Key Info | |
| | |
| -Public Key Algorithm | |
| -Subject Public Key | |
| o Issuer Unique Identifier (optional) | |
| o Subject Unique Identifier (optional) | |
| o Extensions (optional) | |
| | |
| •Certificate Signature Algorithm | |
| •Certificate Signature | |

L'étape de traitement S1 selon l'invention comprend en outre la génération d'un document annexe DA par le tiers 100, ledit document annexe DA ainsi généré et le document d'origine D1 sont signés électroniquement l'un et l'autre par le tiers 100.

Le document annexe ainsi généré intègre également les empreintes numériques de référence HRA du document original D1 de référence auquel le document annexe est associé, ainsi que l'empreinte numérique HRBA du contenu du document original D1 auquel le document annexe DA est associé pris pour signature.

Une fois le traitement effectué par le tiers 100, le document original signé D2 et annexe signé DA ainsi générés sont réceptionnés selon une étape de réception S2 via l'application mettant en oeuvre le procédé selon l'invention.

Selon un mode de réalisation de l'invention, l'étape de traitement S1 comprend une sous étape d'analyse en temps réel du document d'origine D1, D2 en cours de traitement/ de modification, et/ou du document annexe DA associé en cours de génération pour obtenir, pour chaque document respectivement, les métadonnées intrinsèques du/des documents en cours de traitement ; et ainsi que les métadonnées extrinsèques du/des documents en cours de traitement/génération.

L'étape de traitement S1 comprend en outre une seconde sous-étape de calcul des empreintes numériques du/des documents en cours de traitement, et de son contenu selon un ou plusieurs états d'avancement du traitement effectué, ainsi que des empreintes numériques des métadonnées intrinsèques du/des documents en cours de traitement/génération.

L'étape de traitement S1 comprend en outre une troisième sous-étape de dépôt dans un contrat intelligent (B1) d'un système à chaine de blocs (B) les métadonnées intrinsèques, et les métadonnées extrinsèques extraites intégrant les empreintes numériques calculées, et ceci itéré selon un ou plusieurs états d'avancement du traitement effectué sur le/les documents objets de l'étape de traitement S1.

Avantageusement, le dépôt sur un contrat intelligent les métadonnées relatives à un document en cours de traitement en plusieurs point de la phase de traitement permet en outre de permettre la certification en temps réel de l'état du document.

Le procédé selon l'invention comprend une étape de réception S2 en provenance du tiers 100 des documents générés par l'étape de traitement S1, et comportant une première sous-étape d'enregistrement et d'analyse parallèle du document d'origine signé D2 et du document annexe signé DA ainsi reçu, permettant d'obtenir les données relatives au contenu visible desdits documents D2, DA, ainsi que les métadonnées intrinsèques MID2, MIDA et extrinsèques MED2, MEDA associées.

L'enregistrement des documents original signé D2 et annexe signée DA est horodaté dès réception, chaque horodatage étant intégré aux métadonnées extrinsèques MED2, MEDA de chaque document D2, DA.

**[Tableaux 3]**

| **RECEPTION DOCUMENT ORIGINE SIGNE** | |
|---|---|
| Type | Original à légaliser |
| Nom | KBIS SOCIETE PDF |
| Taille | 17Ko |
| Date upload | 09/09/2020 à 10h50 |
| IS User upload | ABL |
| Origine déclarée | DAVRON TRADUCTION |
| ID User Déclarant | ABL |
| HD2 | 98JI |
| HB2 | **Lolp3** |
| HM2 | tDk8 |
| Données Signatures | 08/09/20Certificat**DavronDelivréparChamberSignDatedutxx..... |
| | Etc... |
| ID « PROJET » interne Davron | 7 |

**[Tableaux 4]**

| **RECEPTION DOCUMENT ANNEXE (TRADUCTION)** | |
|---|---|
| Type | Annexe |
| Nom | KBIS TRADUIT RUSSE |
| Taille | 19 Ko |
| Date upload | 09/09/2020 à 10h50 |
| IS User upload | ABL |
| Origine déclarée | DAVRON TRADUCTION |
| ID User Déclarant | ABL |
| HDA | 5Hhu |
| HBA | PooT |
| HMA | 56jU |
| HRA | 98JI |
| HRBA | **Lolp3** |
| Données Signatures | 08/09/20Certificat**DavronDelivréparChamberSignDatedutxx..... |
| | Etc... |
| ID « PROJET » interne Davron | 7 |

Pour le document d'origine signé D2, sont tout d'abord extraites les métadonnées intrinsèques MID2 parmi lesquelles le nom, la taille, ainsi que les données de signatures électroniques et certificats associés.

Selon une sous-étape de calcul de l'étape de réception S2, sont calculées l'empreinte numérique du document d'origine signé HD2, l'empreinte numérique HB2 du contenu ainsi analysé, ainsi que l'empreinte numérique HM1 des métadonnées intrinsèques au document d'origine signé D2, lesdites empreintes étant intégrées aux métadonnées extrinsèques au document d'origine signé D2.

Pour le document annexe signé DA, sont extraites les métadonnées intrinsèques MIDA parmi lesquelles le nom, la taille, ainsi que les données de signatures électroniques et certificats associés, ainsi que les empreintes numériques de référence HRA du document de référence D2 auquel le document annexe DA est associé, et l'empreinte numérique HRBA du contenu du document original D2 auquel le document annexe DA est associé.

Selon une sous-étape de calcul de l'étape de réception S2, sont calculées l'empreinte numérique du document annexe signé HDA, l'empreinte numérique du contenu du document annexe HBA, ainsi que l'empreinte numérique des métadonnées intrinsèques recueillies du document annexe HMA, lesdites empreintes étant intégrées aux métadonnées extrinsèques au document annexe DA.

Une fois les empreintes numériques du document d'origine signé D2 et du document annexe DA calculées, l'étape de réception S2 comprend en outre une sous étape de stockage via une transaction, mise en oeuvre par un second contrat intelligent B2, dans le système à chaine de blocs (B), le second contrat intelligent B2 comprenant les métadonnées intrinsèques et extrinsèques générées des documents d'origine signé D2 et annexe DA.

**[Tableaux 5]**

| Horodatage de la réception du document Génération de métadonnées extrinsèques (MEDA) | Enregistrement du fichier d'origine signé (D2) et du document annexe (DA) associé signé | Horodatage de la réception du document Génération de métadonnées extrinsèques (MED2) |
|---|---|---|
| Document annexe (DA) | Analyse des documents | Document d'origine signé |
| -Métadonnées intrinsèques au document (MIDA) | | -Métadonnées intrinsèques au document (MID2) |
| -Contenu visible du document annexe (DA) | | -Contenu visible du document d'origine signé (D2) |
| Calcul des empreintes numériques : | Calcul des empreintes numériques d'origine | Calcul des empreintes numériques : |
| - du document annexe (HDA) | | - du document d'origine signé (HD2) |
| - du contenu du document annexe (HBA) | | |
| | | - du contenu du document d'origine signé (HB2) |
| - Des métadonnées recueillies du document annexe (HMA) | | |
| | | - Des métadonnées recueillies du document d'origine signées (HM2) |
| Stockage des métadonnées et des empreintes numériques du document annexe, ainsi que les empreintes numériques du document d'origine signé (D2) et du contenu du document d'origine signé (D2) associé au document annexe (DA) | Stockage via une transaction dans un contrat intelligent (B1) vers un système à chaîne de bloc (B) | Stockage des métadonnées et des empreintes numériques du document d'origine signé, ainsi que les empreintes numériques du document d'origine signé (D2) calculées |

Le tableau 5 décrit schématiquement les sous-étapes de l'étape de réception conforme à l'invention.

Selon un mode de réalisation particulier de l'invention l'étape de réception S2, les métadonnées ainsi obtenues à chaque étape d'initialisation S0, de réception S2 sont stockées dans une base de données pour être ensuite associées dans un arbre de Merkle, dont l'empreinte numérique racine est stockée via une transaction dans le système de chaine à blocs B.

Selon un mode de réalisation particulier de l'invention la sous-étape de stockage de l'étape de réception du procédé selon l'invention comprend une sous-étape de contrôle de l'identité des documents à tracer.

La sous-étape de contrôle comprend une première comparaison entre l'empreinte numérique du contenu du document d'origine D1 et l'empreinte numérique du contenu du document d'origine signé D2. Si celle-ci est positive, les documents sont donc identiques.

La sous-étape de contrôle comprend en outre une seconde comparaison entre les empreintes numériques de référence HRA du document de référence D2 auquel le document annexe DA est associé et l'empreinte numérique du document d'origine signé D2, ainsi que la comparaison entre l'empreinte numérique HRBA du contenu du document de référence auquel le document annexe DA est associé et l'empreinte numérique du contenu du document d'origine signé D2.

Si les comparaisons sont positives et que les empreintes numériques sont identiques, alors le document annexe DA présenté est bien associé au document d'origine signé D2.

La sous-étape de contrôle permet de s'assurer de la conformité de la chaine de traçabilité, tout en permettant l'authentification d'un lien d'association entre un document signé D2, et un document annexe DA, formant ainsi une arborescence de traçabilité.

Avantageusement, l'extraction du texte du document lors de chaque sous-étape d'analyse de document D1, D2, DA, permet de ne détecter que le texte présent sur le document, de telle sorte qu'une signature manuscrite sur un document, ou tampon ne serait reconnu comme du contenu textuel et permettant selon un mode de réalisation particulier de conserver une empreinte numérique de contenu identique, et ce même après certains traitement de type signature, légalisation ou apostille, et permet également l'introduction d'un document physique numérisé n'étant pas strictement identique à au document d'origine du fait des conditions de numérisation appliquée.

Selon un mode de réalisation particulier de l'invention, le procédé de traçabilité selon l'invention comprend une étape supplémentaire d'envoi, successive à l'étape d'initialisation S0, et précédent l'étape de traitement S1.

L'étape d'envoi comprend l'envoi du document d'origine D1 au tiers 100, les métadonnées intrinsèques MID1 au document d'origine D1 et les métadonnées extrinsèques MED1 comprenant : les empreintes numériques du document d'origine HD1, de son contenu HB1 et de métadonnées HM1 en relation avec le document d'origine D1, ainsi que les métadonnées d'horodatage de l'action d'envoi du document d'origine D1 au tiers 100, lesquels sont stockées via une transaction mise en oeuvre par un troisième contrat intelligent B3 dans le système à chaine de blocs B.

**[Tableaux 6]**

| **DECLARATION ENVOI AU TRADUCTEUR** | |
|---|---|
| Type | Original à légaliser |
| Nom | KBIS SOCIETE PDF |
| Taille | 17Ko |
| Action | Envoi à étape 1 |
| Destination | DAVRON TRADUCTION |
| Date Envoi déclaré | 08/09/2020 à 12h20 |
| ID User Déclarant | ABL |
| HD1 | 3j4XH |
| HB1 | Lolp3 |
| HM1 | X059 |
| Données Signatures | N/A |
| ID « PROJET » interne Davron | 7 |

Selon un mode de réalisation de l'invention, l'étape d'envoi comprend en outre une sous-étape de contrôle précédant l'envoi du document d'origine D1 à traiter par le tiers 100, de contrôle de l'identité du document d'origine D1 à envoyer.

La sous-étape de contrôle comprend le calcul de l'empreinte numérique du document à envoyer HD1, de l'empreinte numérique HB1 du contenu du document à envoyer, ainsi que l'empreinte numérique HM1 des métadonnées intrinsèques en relation avec le document d'origine D1 à envoyer.

La sous-étape de contrôle comprend en outre une étape de comparaison entre, d'une part, l'empreinte numérique du document à envoyer HD1 et l'empreinte numérique HD1 du document d'origine D1, et d'autre part, entre l'empreinte numérique HB1 du contenu du document à envoyer et l'empreinte numérique du contenu HB1 du document d'origine D1.

Si la comparaison est positive, le document à envoyer au tiers est bien le document d'origine D1.

**[Tableaux 7]**

| Horodatage de la réception du document Génération de métadonnées extrinsèques (MEDA) | Enregistrement du fichier d'origine signé (D2) et du document annexe (DA) associé signé | Horodatage de la réception du document Génération de métadonnées extrinsèques (MED2) |
|---|---|---|
| Document annexe (DA) | Analyse des documents | Document d'origine signé |
| -Métadonnées intrinsèques au document (MIDA) | | -Métadonnées intrinsèques au document (MID2) |
| -Contenu visible du document annexe (DA) | | -Contenu visible du document d'origine signé (D2) |
| Calcul des empreintes numériques | Calcul des empreintes numériques d'origine | Calcul des empreintes numériques : |
| - du document annexe (HDA) | | - du document d'origine signé (HD2) |
| - du contenu du document annexe (HBA) | | |
| | | - du contenu du document d'origine signé (HB2) |
| - Des métadonnées recueillies du document annexe (HMA) | | |
| | | - Des métadonnées recueillies du document d'origine signées (HM2) |
| Contrôles supplémentaires : HB1 = HB2? Si oui, on parle du même document. HRA = HD1 et HRBA = HB1 ? Si oui, le document d'annexe fait référence au bon document | | |
| Stockage des métadonnées et des empreintes numériques du document annexe, ainsi que les empreintes numériques du document d'origine signé (D2) et du contenu du document d'origine signé (D2) associé au document annexe (DA) | Stockage via une transaction dans un contrat intelligent (B1) vers un système à chaîne de bloc (B) | Stockage des métadonnées et des empreintes numériques du document d'origine signé, ainsi que les empreintes numériques du document d'origine signé (D2) calculées |

Le tableau 7 décrit schématiquement un mode de réalisation particulier des sous-étapes de l'étape de réception conforme à l'invention.

Selon un mode de réalisation de l'invention, la sous-étape de contrôle comprend en outre un contrôle visuel de conformité.

Le contrôle visuel de conformité pouvant être mise en oeuvre par la comparaison du contenu visible extrait à titre d'exemple entre un document d'origine D1 et un document d'origine signé D2, un document d'origine D1 et un document annexe correspondant au document d'origine apostillé/légalisé, ou tout document associé avec un autre document dont le contenu comprend des éléments identiques.

A titre d'exemple, un document d'origine D1 comportant après traitement un sceau, tampon, ou une signature physiquement appliquée par un tiers 100 puis numérisé peut être comparé au document d'origine D1 associé de telle sorte que leurs contenus visibles respectifs soient comparés pour confirmer l'identité des deux documents sur au moins une partie de leur contenus visibles respectifs.

Selon un autre mode de réalisation de l'invention, le procédé de traçabilité est mis en oeuvre par plusieurs tiers successifs (100, 200).

Les étapes d'initialisation S0, de traitement S1 et de réception S2 sont répétées par le tiers suivant (200) sur la base du document d'origine signé (D2) et du document annexe signé (DA) généré par le tiers précédent (100).

Selon un mode de réalisation particulier de l'invention, les sous-étapes de stockage dans un contrat intelligent (B1, B2, B3) via une transaction dans le système de chaine à blocs B sont toutes effectuées sur un seul contrat intelligent regroupant les informations stockées.

Avantageusement, le stockage dans un contrat intelligent unique permet aux entités de vérification de la piste d'audit de disposer de toutes les informations nécessaires à la validation de l'authentification des documents sur un même support sur le système à chaine de bloc B.

Selon un mode de réalisation alternatif de l'invention, l'identité du système à chaine de bloc B à utiliser pour les sous-étapes de stockage peut être sélectionné par un utilisateur selon les paramètres de sauvegarde choisis par ledit utilisateur lors de l'enregistrement du document d'origine D1.

Le dépôt de métadonnées cibles selon l'invention en tout point du procédé sur au moins un contrat intelligent B1 du système à chaine de bloc B permet en outre de certifier l'état d'un document, ou de données choisies de ce(s) document(s) ou de son association avec un document annexe, rendant les informations qu'il comporte immuables et traçables dans la piste d'audit ainsi créée et permettant de consolider la piste d'audit lors des cycles de traitements successif des documents.

L'empreinte numérique des métadonnées intrinsèques de chaque document D1, D2, DA permet en outre de rendre immuable et certifier notamment les métadonnées concernant la/les signatures électroniques de chaque tiers 100, ainsi que leurs métadonnées associées et ainsi permettre d'obtenir un procédé permettant séquentiellement la multiplicité des signatures sur un document ou un document et au moins un document associé de manière désynchronisé.

Un tel procédé permet en outre d'éviter l'écrasement de signature(s) précédente(s) en cas de signature par un logiciel différent sur le ou les documents traités, et ainsi permettre de tracer individuellement, chaque ajout de signature audit(s) document(s) séquentiellement sur la piste d'audit.

Selon un premier mode de réalisation, le document original D1 est certifié par un notaire, il est ensuite envoyé à un premier tiers 100 pour être traduit, et la traduction ainsi générée est signée, les document D2,DA sont ensuite envoyés à un tiers supplémentaire 200 pour légalisation, le tiers supplémentaire 200 étant une autorité gouvernementale, et les documents ainsi générés sont envoyé vers un second tiers supplémentaire 200 de type consulat, les documents précédemment générés étant soumis à un traitement de type surlégalisation.

Selon un second mode de réalisation, le document original D1 est certifié par un notaire, il est ensuite envoyé à un premier tiers 100 pour être traduit, et la traduction ainsi générée est signée, les document D2, DA sont ensuite envoyés à un tiers supplémentaire 200 pour apostille, le tiers supplémentaire 200 étant une autorité gouvernementale.

En pratique, les sous-étapes d'enregistrement des étapes d'initialisation S0 et de réception S2 sont mises en oeuvre de manière temporaire jusqu'au stockage des informations requises dans le système à chaîne de bloc B, pour que les documents D1, D2, DA ne soient pas archivés de manière définitive, et ainsi garantir la confidentialité des documents D1, D2, DA.

A titre d'exemple, les documents D1, D2, DA sont des fichiers de type PDF.

La piste d'audit du système à chaîne de blocs B est ainsi alimentée au fil de l'eau par les traitements des tiers successifs (100, 200), et chaque étape d'initialisation S0 et de réception S2, permet le stockage de données successives, relatives à chaque tiers 100,200, et ainsi assurer à tout tiers vérificateur, un accès à un arbre d'authentification depuis le document d'origine D1.

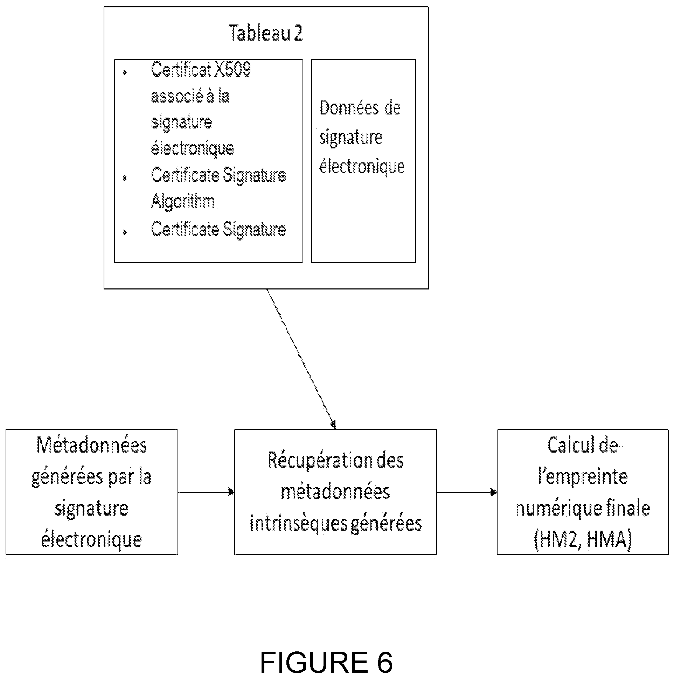

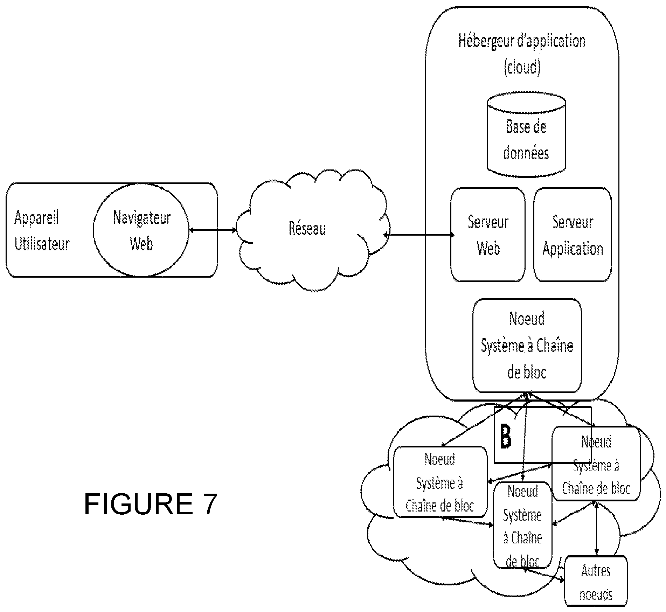

En référence aux **figures 6** **et** **7****,** l'invention porte aussi sur une plateforme de traçabilité d'un document annexe DA généré par un tiers 100 à partir d'un document d'origine D1, ladite plateforme interagissant avec un système à chaîne de blocs B pour la mise en oeuvre du procédé de traçabilité.

La plateforme de traçabilité selon l'invention, de structure choisie comprenant :
- des moyens d'enregistrement et d'analyse du document d'origine D1 pour obtenir des métadonnées d'initialisation comprenant des métadonnées intrinsèques MID1 au document d'origine D1 et des métadonnées extrinsèques MED1 comprenant des empreintes numériques du document d'origine HD1, de son contenu HB1 et des métadonnées HM1 en relation avec le document d'origine D1 ;
- des moyens de réception S2 en provenance du tiers 100 comprenant des moyens d'enregistrement et d'analyse du document d'origine D2 et du document annexe DA ainsi reçus signés en provenance du tiers 100 pour obtenir des données de réception comprenant des métadonnées intrinsèques du document d'origine et des empreintes numériques du document d'origine reçu HD2, du document annexe HDA et du document de référence HRA et de leur contenu respectif HBA, HB2, HBRA ainsi que de métadonnées HM2, HMA en relation avec le document d'origine et le document annexe;
- des moyens pour déposer les métadonnées d'initialisation et les métadonnées de réception dans un contrat intelligent respectif du système à chaine de blocs B.

En pratique, la plateforme selon l'invention comprend au moins un serveur Web apte à être connecté via un réseau à un appareil utilisateur, et apte à recevoir et enregistrer au moins un document appartenant au groupe formé par document d'origine D1, document d'origine signé D2, et document annexe généré DA, en provenance de l'utilisateur, ou d'un tiers 100, 200.

Selon un mode de réalisation de l'invention la plateforme selon l'invention comprend en outre au moins un serveur d'application apte à permettre l'analyse d'au moins un document appartenant au groupe formé par document d'origine D1, document d'origine signé D2, et document annexe généré DA, et permettre le calcul des empreintes numériques HD1, HB1, HM1, HD2, HB2, HM2, HDA, HBA, HMA nécessaires lors de la mise en oeuvre du procédé de traçabilité selon l'invention.

La plateforme selon l'invention comprend en outre un module de stockage, apte à permettre le stockage via des transactions exécutées dans des contrats intelligents B1, B2, B3, dans un système à chaîne de bloc B.

Ledit module de stockage comprend au moins un serveur formant Noeud apte à faire partie intégrante du système à chaîne de bloc B comportant une multitude de noeuds interconnectés.

Selon un mode de réalisation de l'invention, le système de chaîne à bloc B est un système à chaîne de blocs public.

Selon un mode de réalisation alternatif de l'invention, le système de chaîne à bloc B est un système à chaîne de blocs privé.

Selon un mode de réalisation particulier de l'invention, la plateforme selon l'invention comprend en outre une pluralité de bases de données.

Chaque base de données comprenant au moins une liste de tiers A, B, C aptes à effectuer au moins un traitement 101, 201 choisi, ainsi que des informations relatives auxdits tiers A, B, C tel que leurs coordonnées, numéros d'identification dans la plateforme, et analogues.

Selon un mode de réalisation particulier de l'invention, la plateforme comprend un module applicatif permettant le guidage d'un utilisateur dans la procédure de traitement, par sélection des tiers auxquels présenter le document d'origine D1 à traiter, selon des paramètres de traitement prédéfinis, fixés par l'utilisateur.

Le module applicatif de la plateforme selon l'invention est tout d'abord apte à enregistrer les paramètres de traitement du document D1 souhaités par un utilisateur.

A titre d'exemple, si les paramètres de traitement sont la traduction et la certification par une entité gouvernementale, les tiers A, B, C à sélectionner pour le traitement devront permettre la traduction et la légalisation.

En pratique, le module applicatif de la plateforme selon l'invention est apte à identifier au moins un traitement 101 appartenant au groupe formé par traduction d'un document, légalisation, et génération d'une apostille.

A partir des paramètres de traitement définis, le module applicatif est apte à sélectionner pour chaque type de traitement sélectionné au moins un tiers A, B, C, apte à effectuer ledit traitement à partir des bases de données de tiers A, B, C, et apte à permettre le recrutement du tiers suivant 200 après traitement et l'enregistrement du document traité D2, DA par le tiers courant 100.

Selon un mode de réalisation particulier de l'invention, la plateforme selon l'invention comprend en outre un module de type APl, configuré pour permettre le recrutement d'au moins un outil de signature électronique externe à destination du tiers 100, et recevoir sous la forme d'un IFrame, un exécutable à appliquer sur le document à signer électroniquement par le tiers.

## Revendications

1. Procédé de traçabilité d'un document annexe (DA) généré par un tiers (100) à partir d'un document d'origine (D1) auquel il est associé, ledit procédé utilisant un système à chaîne de blocs et comprenant les étapes suivantes :
- une étape d'initialisation (S0) comprenant :
- l'enregistrement et l'analyse du document d'origine (D1) pour obtenir des métadonnées d'initialisation du document d'origine (D1), lesquelles comprennent :
- des métadonnées intrinsèques (MIDI) au document d'origine (D1) ; et
- des métadonnées extrinsèques (MED1) au document d'origine (D1);
- le calcul d'une empreinte numérique (HD1) du document d'origine (D1), d'une empreinte numérique (HB1) du contenu du document d'origine (D1) et d'une empreinte numérique (HM1) des métadonnées intrinsèques (MIDI) du document d'origine (D1) ;
- déposer dans un contrat intelligent (B1) d'un système à chaine de blocs (B) les métadonnées d'initialisation du document d'origine (D1), dont les métadonnées intrinsèques (MID1), et les métadonnées extrinsèques (MED1) ainsi que les empreintes numériques calculées (HD1,HB1,HM1) ;
- une étape de traitement (S1) par le tiers (100) comprenant la génération du document annexe (DA) par le tiers (100), le document d'origine (D1) reçu ainsi que ledit document annexe (DA) ainsi généré par le tiers (100) étant signés électroniquement l'un et l'autre par ledit tiers (100), le document annexe (DA) intégrant dans ses métadonnées extrinsèques (MEDA), des empreintes numériques du document d'origine (D1) auquel est associé le document annexe (DA), et les empreintes numériques (HRBA) du contenu du document d'origine (D1) pris pour signature ; et
- une étape de réception (S2) en provenance du tiers (100) comprenant l'enregistrement et l'analyse en parallèle du document d'origine signé (D2) et du document annexe signé (DA) reçu en provenance du tiers (100), pour obtenir des métadonnées de réception comprenant :
- des métadonnées intrinsèques (MID2) du document d'origine signé (D2) et les métadonnées intrinsèques (MIDA) du document annexe (DA) signé;
- des métadonnées extrinsèques (MED2) du document d'origine signé (D2) et les métadonnées extrinsèques (MEDA) du document annexe (DA) signé comprenant les empreintes numériques :
- du document d'origine signé (HD2), du document annexe (HDA) et du document d'origine (D1) et de leur contenu respectif (HBA, HB2, HBRA) ;
- des métadonnées (HM2, HMA) en relation avec le document d'origine signé (D2) et le document annexe signé (DA) ; les métadonnées de réception étant déposées dans le contrat intelligent (B1) du système à chaine de blocs (B); et le procédé comprenant en outre une étape de dépôt dans un contrat intelligent (B1) d'un système à chaine de blocs (B) après chaque étape d'initialisation (S0) et après chaque étape de réception (S2), permettant ainsi de constituer une piste d'audit et de traçabilité du document annexe (DA) généré par le tiers (100) à partir du document d'origine auquel il est associé (D1).

2. Procédé de traçabilité selon la revendication 1, comprenant en outre une étape d'envoi du document d'origine (D1) au tiers (100), les métadonnées intrinsèques (MID1) au document d'origine (D1) et les métadonnées extrinsèques (MED1) comprenant les empreintes numériques du document d'origine (HD1), de son contenu (HB1) et de métadonnées (HM1) en relation avec le document d'origine (D1) étant déposées dans un contrat intelligent (B1) du système à chaine de blocs (B).

3. Procédé de traçabilité selon l'une quelconque des revendications 1 à 2, dans lequel les métadonnées ainsi obtenues à chaque étape d'initialisation (S0), d'envoi et de réception (S2) sont stockées dans une base de données pour être ensuite associées dans un arbre de Merkle, dont le hash racine est déposé dans le système de chaine à blocs (B).

4. Procédé de traçabilité selon l'une des revendications 1 à 3, dans lequel les métadonnées intrinsèques (MID1, MID2, MIDA) appartiennent au groupe formé par type, nom, taille, date d'enregistrement, identifiant utilisateur, données de signature électronique, et le ou les certificats associés aux données de signature électronique.

5. Procédé de traçabilité selon l'une des revendications 1 à 4, dans lequel les empreintes numériques (HD1, HB1, HM1, HD2, HB2, HM2, HDA, HBA, HMA) sont calculées selon une fonction de hachage choisie.

6. Procédé de traçabilité selon la revendication 5, dans lequel la fonction de hachage est SHA 256.

7. Procédé de traçabilité selon l'une quelconque des revendications 1 à 6, dans lequel le document annexe (DA) appartient au groupe formé par document traduit, document numérique contenant une légalisation, document numérique comprenant une apostille.

8. Procédé selon l'une quelconque des revendications 1 à 7, mis en oeuvre par plusieurs tiers successifs (100 200), les étapes d'initialisation (S0), de traitement (S1) et de réception (S2) étant répétées par le tiers suivant (200) sur la base du document d'origine signé (D2) et du document annexe (DA) généré par le tiers précédent (100), la piste d'audit du système à chaîne de blocs (B) étant ainsi alimentée au fil de l'eau par les traitements des tiers successifs (100, 200).

9. Plateforme de traçabilité d'un document annexe (DA) généré par un tiers (100) à partir d'un document d'origine (D1), ladite plateforme interagissant avec un système à chaîne de blocs (B) pour la mise en oeuvre du procédé selon l'une quelconque des revendications 1 à 8, ladite plateforme comprenant:
- des moyens d'enregistrement et d'analyse du document d'origine (D1) pour obtenir des métadonnées d'initialisation comprenant des métadonnées intrinsèques (MIDI) au document d'origine (D1) et des métadonnées extrinsèques (MED1) comprenant des empreintes numériques du document d'origine (HD1), de son contenu (HB1) et les métadonnées intrinsèques (HM1) du document d'origine (D1),
- des moyens de réception en provenance du tiers (100) comprenant des moyens d'enregistrement et d'analyse du document d'origine (D2) et du document annexe (DA) ainsi reçus signés en provenance du tiers (100) pour obtenir des données de réception comprenant des métadonnées intrinsèques (MIDI) du document d'origine (D1) signé et les métadonnées intrinsèques du document annexe (DA) signé, des métadonnées extrinsèques du document d'origine signé et les métadonnées extrinsèques du document annexe signé comprenant les empreintes numériques du document d'origine signé (HD2), du document annexe (HDA) et du document d'origine (D1) et de leur contenu respectif (HBA, HB2, HBRA) ainsi que de métadonnées (HM2, HMA) en relation avec le document d'origine signé (D2) et le document annexe signé (DA);
- des moyens pour déposer les métadonnées d'initialisation et les métadonnées de réception dans un contrat intelligent (B1) du système à chaine de blocs (B), et dans laquelle plusieurs tiers successifs (100, 200) sont aptes à alimenter au fil du temps la piste d'audit du système à chaîne de blocs (B) par le tiers suivant (200) sur la base du document d'origine signé (D2) et du document annexe (DA) généré par le tiers précédent (100)

10. Plateforme de traçabilité selon la revendication 9, comprenant un module applicatif apte à enregistrer les paramètres de traitement du document (D1) souhaités par un utilisateur, apte à identifier au moins un traitement appartenant au groupe formé par traduction d'un document, légalisation, génération d'une apostille, apte à sélectionner pour chaque type de traitement au moins un tiers (A, B,C) et apte à permettre le recrutement du tiers suivant (200) après traitement et l'enregistrement du document traité (D2, DA) par le tiers courant (100).

11. Plateforme de traçabilité selon la revendication 9 ou 10 comprenant un outil interactif avec une pluralité de bases de données comprenant chacune au moins une liste de tiers (A, B, C) aptes à effectuer au moins un traitement choisi ainsi que des informations relatives auxdits tiers (A, B, C)

## Patentansprüche

1. Verfahren zur Rückverfolgbarkeit eines von einem Dritten (100) erzeugten Anlage-Dokuments (DA) aus einem Originaldokument (D1), dem es zugeordnet ist, wobei das Verfahren ein Blockchain-System verwendet und die folgenden Schritte umfasst:
- einen Initialisierungsschritt (S0) mit:
- Speichern und Analysieren des Originaldokuments (D1), um Metadaten zur Initialisierung des Originaldokuments (D1) zu erhalten, Folgendes umfassen:
- intrinsische Metadaten (MID1) zum Originaldokument (D1); und
- extrinsische Metadaten (MED1) zum Originaldokument (D1);
- die Berechnung eines digitalen Fingerabdrucks (HD1) des Originaldokuments (D1), eines digitalen Fingerabdrucks (HB1) des Inhalts des Originaldokuments (D1) und eines digitalen Fingerabdrucks (HM1) der intrinsischen Metadaten (MID1) des Originaldokuments (D1);
- Hinterlegen der Initialisierungsmetadaten des Originaldokuments (D1), einschließlich der intrinsischen Metadaten (MID1) und der extrinsischen Metadaten (MED1), sowie der berechneten digitalen Fingerabdrücke (HD1, HB1, HM1) in einem Smart Contract (B1) eines Blockchain-Systems (B);
- einen Verarbeitungsschritt (S1) durch den Dritten (100), der die Erzeugung des Anlage-Dokuments (DA) durch die Dritte (100) umfasst, wobei das empfangene Originaldokument (D1) sowie das so von dem Dritten (100) erzeugte Anlage-Dokument (DA) beide von dem Dritten (100) elektronisch signiert werden, wobei das Anlage-Dokument (DA) in seinen extrinsischen Metadaten (MEDA) digitale Fingerabdrücke des Originaldokuments (D1), dem das Anlage-Dokument (DA) zugeordnet ist, und die digitalen Fingerabdrücke (HRBA) des Inhalts des Originaldokuments (D1), das zur Unterschrift genommen wurde, integriert; und
- einen Empfangsschritt (S2) von dem Dritten (100), der das parallele Registrieren und Analysieren des signierten Originaldokuments (D2) und des signierten Anlage-Dokuments (DA), das von dem Dritten (100) empfangen wurde, umfasst, um Empfangsmetadaten zu erhalten, die Folgendes umfassen:
- die intrinsischen Metadaten (MID2) des signierten Originaldokuments (D2) und die intrinsischen Metadaten (MIDA) des signierten Anlage-Dokuments (DA);
- extrinsische Metadaten (MED2) des signierten Originaldokuments (D2) und extrinsische Metadaten (MEDA) des unterzeichneten Anlage-Dokuments (BD) einschließlich der digitalen Fingerabdrücke:
- des unterzeichneten Originaldokuments (HD2), des Anlage-Dokuments (HDA) und des Originaldokuments (D1) sowie ihres jeweiligen Inhalts (HBA, HB2, HBRA);
- Metadaten (HM2, HMA) in Bezug auf das signierte Originaldokument (D2) und das signierte Anlage-Dokument (DA); wobei die empfangenen Metadaten in dem Smart Contract (B1) des Blockchain-Systems (B) hinterlegt sind; und wobei das Verfahren ² weiterhin einen Schritt der Hinterlegung in einem Smart Contract (B1) eines Blockchain-Systems (B) nach jedem Initialisierungsschritt (S0) und jedem Empfangsschritt (S2) umfasst, wodurch es möglich ist, einen Prüf- und Rückverfolgbarkeitsweg des von dem Dritten (100) aus dem Originaldokument erzeugten Anlage-Dokuments (DA), dem es zugeordnet ist (D1), zu bilden.

2. Verfahren zur Rückverfolgbarkeit nach Anspruch 1, umfassend außerdem einen Schritt des Sendens des Originaldokuments (D1) an den Dritten (100), wobei die intrinsischen Metadaten (MID1) des Originaldokuments (D1) und die extrinsischen Metadaten (MED1), die die digitalen Fingerabdrücke des Originaldokuments (HD1), seines Inhalts (HB1) und von Metadaten (HM1) in Verbindung mit dem Originaldokument (D1) umfassen, in einem Smart Contract (B1) des Blockchain-Systems (B) hinterlegt sind.

3. Verfahren zur Rückverfolgbarkeit nach einem der Ansprüche 1 bis 2, wobei die so in jedem Schritt erhaltenen Metadaten
der Initialisierung (S0), des Sendens und des Empfangs (S2) in einer Datenbank gespeichert werden, um sodann in einem Merkle-Baum verknüpft zu werden, dessen Wurzel-Hash in dem Blockchain-System (B) hinterlegt wird.

4. Verfahren zur Rückverfolgbarkeit nach einem der Ansprüche 1 bis 3, wobei die intrinsischen Metadaten (MIDI, MID2, MIDA) zu der Gruppe gehören, die aus Typ, Name, Größe, Registrierungsdatum, Benutzerkennung, elektronischen Signaturdaten und dem Zertifikat oder den Zertifikaten, die mit den elektronischen Signaturdaten verknüpft sind, besteht.

5. Verfahren zur Rückverfolgbarkeit nach einem der Ansprüche 1 bis 4, wobei die digitalen Fingerabdrücke (HD1, HB1, HM1, HD2, HB2, HM2, HM2, HDA, HBA, HMA) nach einer ausgewählten Hashfunktion berechnet werden.

6. Verfahren zur Rückverfolgbarkeit nach Anspruch 5, wobei die Hashfunktion SHA 256 ist.

7. Verfahren zur Rückverfolgbarkeit nach einem der Ansprüche 1 bis 6, wobei das Anlage-Dokument (DA) zu der Gruppe gehört, die aus übersetztem Dokument, digitalem Dokument, das eine Beglaubigung enthält, digitalem Dokument, das eine Apostille enthält, besteht.

8. Verfahren nach einem der Ansprüche 1 bis 7, von mehreren aufeinanderfolgenden Dritten (100 200) durchgeführt, wobei die Schritte der Initialisierung (S0), der Verarbeitung (S1) und des Empfangs (S2) von dem nachfolgenden Dritten (200) auf der Grundlage des unterzeichneten Originaldokuments (D2) und des von dem vorhergehenden Dritten (100) erzeugten Anlage-Dokuments (DA) wiederholt werden, wobei der Prüfpfad des Blockchain-Systems (B) so im Laufe der Zeit durch die Verarbeitungen der aufeinanderfolgenden Dritten (100, 200) gespeist wird.

9. Plattform zur Rückverfolgbarkeit eines von einem Dritten (100) aus einem Originaldokument (D1) erzeugten Anlage-Dokuments (DA), wobei die Plattform mit einem Blockchain-System (B) zur Durchführung des Verfahrens nach einem der Ansprüche 1 bis 8 interagiert, wobei die Plattform Folgendes:
- Mittel zur Aufzeichnung und Analyse des Originaldokuments (D1), um Initialisierungsmetadaten zu erhalten, die intrinsische Metadaten (MID1) des Originaldokuments (D1) und extrinsische Metadaten (MED1) umfassen, die digitalen Fingerabdrücke des Originaldokuments (HD1), seines Inhalts (HB1) und die intrinsischen Metadaten (HM1) des Originaldokuments (D1) umfassen,
- Empfangsmittel von dem Dritten (100), die Mittel zum Registrieren und Analysieren des so empfangenen signierten Originaldokuments (D2) und des so empfangenen signierten Anhang-Dokuments (DA) von dem Dritten (100) umfassen, um Empfangsdaten zu erhalten, die intrinsische Metadaten (MID1) des signierten Originaldokuments (D1) und die intrinsischen Metadaten des signierten Anlage-Dokuments (DA) umfassen, extrinsische Metadaten des signierten Originaldokuments und die extrinsischen Metadaten des signierten Anlage-Dokuments, die die digitalen Fingerabdrücke des signierten Originaldokuments (HD2), des Anlage-Dokuments (HDA) und des Originaldokuments (D1) und deren jeweiligem Inhalt (HBA, HB2, HBRA) sowie Metadaten (HM2, HMA) in Bezug auf das unterzeichnete Originaldokument D2 und das unterzeichnete Anlage-Dokument (DA) enthalten;
- Mittel zum Hinterlegen der Initialisierungsmetadaten und der Empfangsmetadaten in einem Smart Contract (B1) des Blockchain-Systems (B), und wobei mehrere aufeinanderfolgende Dritte (100, 200) dazu geeignet sind, im Laufe der Zeit die Prüfpfad des Blockchain-Systems (B) durch den folgenden Dritten (200) auf der Grundlage des unterzeichneten Originaldokuments (D2) und des von dem vorherigen Dritten (100) erzeugten Anhange-Dokuments (DA).

10. Rückverfolgbarkeitsplattform nach Anspruch 9, umfassend ein Anwendungsmodul-das geeignet ist, die von einem Benutzer gewünschten Parameter für die Bearbeitung des Dokuments (D1) zu speichern, geeignet ist, mindestens eine Bearbeitung zu identifizieren, die zu der Gruppe gehört, die aus der Übersetzung eines Dokuments, der Legalisierung und der Erzeugung einer Apostille besteht, geeignet ist, für jeden Bearbeitungstyp mindestens einen Dritten (A, B, C) auszuwählen, und geeignet ist, die Einstellung dem nächsten Dritten (200) nach der Bearbeitung und der Registrierung des bearbeiteten Dokuments (D2, DA) durch den aktuellen Dritten (100) zu ermöglichen.

11. Rückverfolgbarkeitsplattform nach Anspruch 9 oder 10 bestehend aus einem interaktiven Werkzeug mit einer Vielzahl von Datenbanken, von denen jede mindestens eine Liste von Dritten (A, B, C), die geeignet sind, mindestens eine ausgewählte Behandlung durchzuführen, sowie Informationen über die genannten Dritten (A, B, C) enthält.

## Claims

1. A traceability process for an attachment document (DA) generated by a third party (100) from an original document (D1) with which it is associated, said process using a blockchain system and comprising the following steps:
- an initialization step (S0) comprising:
- registration and analysis of the original document (D1) for the purpose of obtaining initialization metadata for the original document (D1), consisting of:
- intrinsic metadata (MID1) of the original document (D1); and
- extrinsic metadata (MED1) of the original document (D1);
- calculation of a digital fingerprint (HD1) of the original document (D1), a digital fingerprint (HB1) of the content of the original document (D1), and a digital fingerprint (HM1) of the intrinsic metadata (MID1) of the original document (D1);
- placing in an intelligent contract (B1) of a blockchain system (B) the initialization metadata of the original document (D1), which includes the intrinsic metadata (MID1) and the extrinsic metadata (MED1) as well as the calculated digital fingerprints (HD1,HB1,HM1);
- a processing step (S1) by the third party (100) comprising the generation of the attachment document (DA) by the third party (100), the original document (D1) thus received and said attachment document (DA) thus generated by the third party (100) both being electronically signed by said third party (100), the attachment document (DA) integrating in its extrinsic metadata (MEDA), digital fingerprints of the original document (D1) with which the attachment document (DA) is associated, and the digital fingerprints (HRBA) of the content of the original document (D1) taken for signature; and
- a reception step (S2) from the third party (100) comprising the registration and parallel analysis of the original signed document (D2) and the signed attachment document (DA) received from the third party (100), in order to obtain reception metadata comprising:
- intrinsic metadata (MID2) of the original signed document (D2) and the intrinsic metadata (MIDA) of the signed attachment document (DA);
- extrinsic metadata (MED2) of the original signed document (D2) and extrinsic metadata (MEDA) of the signed attachment document (DA), including the digital fingerprints:
- of the original signed document (HD2), the attachment document (HDA) and the original document (D1) and their respective content (HBA, HB2, HBRA);
- of the metadata (HM2, HMA) in relation to the signed original document (D2) and the signed attachment document (DA); the reception metadata being placed in the smart contract (B1) of the blockchain system (B); and the procedure further comprising a step involving placing in an intelligent contract (B1) of a blockchain system (B) after each initialization step (S0) and after each reception step (S2), thus making it possible to establish an audit trail and enabling traceability of the attachment document (DA) generated by the third party (100) from the original document with which it is associated (D1).

2. A traceability process in accordance with claim 1, comprising, further a step involving sending the original document (D1) to the third party (100) the intrinsic metadata (MID1) of the original document (D1) and the extrinsic metadata (MED1) comprising the digital fingerprints of the original document (HD1), of its content (HB1), and of metadata (HM1) related to the original document (D1) being placed in an intelligent contract (B1) of the blockchain system (B).

3. A traceability process in accordance with any one of claims 1 to 2, in which the metadata thus obtained at each step
of initialization (S0), sending and reception (S2) are stored in a database for subsequent association in a Merkle tree, whose root hash is placed in the blockchain system (B).

4. A traceability process in accordance with one of claims 1 to 3, in which the intrinsic metadata (MIDI, MID2, MIDA) belongs to the group formed by type, name, size, registration date, user identifier, electronic signature data, and the certificate(s) associated with the electronic signature data.

5. A traceability process in accordance with one of claims 1 to 4, in which the digital fingerprints (HD1, HB1, HM1, HD2, HB2, HM2, HAD, HBA, HMA) are calculated using a chosen hash function.

6. a traceability process in accordance with claim 5, in which the hash function is SHA 256.

7. A traceability process in accordance with any one of claims 1 to 6, in which the attachment document (DA) belongs to the group formed by translated document, digital document containing a legalization, digital document containing an apostille.

8. A process in accordance with any one of claims 1 to 7, implemented by several successive third parties (100 200), the initialization (S0), processing (S1) and reception (S2) steps being repeated by the following third party (200) on the basis of the original signed document (D2) and the attachment document (DA) generated by the previous third party (100), the audit trail of the blockchain system (B) thus being populated over time through processing by successive third parties (100, 200).

9. A platform for traceability of an attachment document (DA) generated by a third party (100) from an original document (D1), said platform interacting with a blockchain system (B) for implementing the process in accordance with any one of claims 1 to 8, said platform comprising :
- means of recording and analyzing the original document (D1) for the purpose of obtaining initialization metadata comprising intrinsic metadata (MID1) of the original document (D1) and extrinsic metadata (MED1) comprising digital fingerprints of the original document (HD1), its content (HB1) and intrinsic metadata of the original document (D1),
- means of reception from the third party (100) comprising means of recording and analyzing the original document (D2) and the attached document (DA) thus received signed from the third party (100) for the purpose of obtaining reception data comprising intrinsic metadata (MID1) of the signed original document (D1) and the intrinsic metadata of the signed attachment document (DA), extrinsic metadata of the signed original document and the extrinsic metadata of the signed attachment document including the digital fingerprints of the signed original document (HD2), the attachment document (HDA) and original document (D1) and their respective content (HBA,
HB2, HBRA) as well as metadata (HM2, HMA) in relation to the signed original document (D2 and the signed attachment document (DA);
- means for placing the initialization metadata and the reception metadata in a smart contract (B1) of the blockchain system (B), and in which several successive third parties (100, 200) are able to populate over time the audit trail of the blockchain system (B) by the following third party (200) on the basis of the original signed document (D2) and the attachment document (DA) generated by the previous third party (100).

10. A traceability platform in accordance with claim 9, comprising an application module capable of recording the processing parameters of the document (D1) desired by a user, capable of identifying at least one processing operation belonging to the group formed by translation of a document, legalization, generation of an apostille, capable of selecting for each type of processing at least one third party (A, B, C), and capable of enabling the recruitment of the following third party (200) after processing and recording of the processed document (D2, DA) by the current third party (100).

11. Traceability platform in accordance with claim 9 or 10_{'}, comprising an interactive tool with multiple databases, each comprising at least one list of third parties (A, B, C) capable of performing at least one selected processing operation, as well as information relating to said third parties (A, B, C).
